(19) Europäisches Patentamt
European Patent Office
Office européen des brevets

(11) EP 0 649 448 B1

# (12) FASCICULE DE BREVET EUROPEEN

(45) Date de publication et mention de la délivrance du brevet:
**02.10.1996 Bulletin 1996/40**

(21) Numéro de dépôt: **93914809.4**

(22) Date de dépôt: **02.07.1993**

(51) Int Cl.6: **C09D 5/08**, C23F 11/14, C23F 11/16, C08K 5/23

(86) Numéro de dépôt international:
**PCT/FR93/00685**

(87) Numéro de publication internationale:
**WO 94/01501 (20.01.1994 Gazette 1994/03)**

## (54) PROCEDE ET PRODUIT DE PROTECTION CONTRE LA CORROSION ET APPLICATION A DES ALLIAGES D'ALUMINIUM

VERFAHREN UND PRODUKT ZUM KORROSIONSSCHUTZ UND VERWENDUNG FÜR ALUMINIUM-LEGIERUNGEN

CORROSION PROTECTION MATERIAL AND METHOD, AND USE THEREOF FOR ALUMINIUM ALLOYS

(84) Etats contractants désignés:
**DE FR GB NL**

(30) Priorité: **06.07.1992 FR 9208419**

(43) Date de publication de la demande:
**26.04.1995 Bulletin 1995/17**

(73) Titulaires:
- **GACHES CHIMIE S.A.**
**F-31750 Escalquens (FR)**
- **MAURET, Pierre**
**F-31520 Ramonville-Saint-Agne (FR)**

(72) Inventeurs:
- **MAURET, Pierre**
**F-31520 Ramonville-Saint-Agne (FR)**
- **GACHES, Louis**
**F-31400 Toulouse (FR)**

(74) Mandataire:
**Cabinet BARRE LAFORGUE & associés**
**95, rue des Amidonniers**
**31000 Toulouse (FR)**

(56) Documents cités:
**DE-A- 2 018 689** **FR-A- 2 156 922**
**US-A- 4 527 994**

- **DATABASE WPI Section Ch, Derwent Publications Ltd., London, GB; Class E10, AN 79-07066B & JP,B,53 047 890 (HITACHI MAXELL) 25 Décembre 1979**
- **DATABASE WPI Section Ch, Week 47, Derwent Publications Ltd., London, GB; Class A08, AN 83-823319 & JP,A,58 174 445 (NIPPON KAYAKU KK) 13 Octobre 1983**
- **PATENT ABSTRACTS OF JAPAN vol. 10, no. 13 18 Janvier 1986 & JP,A,60 168 743 (NIPPON KAYAKU KK) 2 Septembre 1985**
- **Chemical Abstracts vol.119, no.10, resumé 97977k**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 649 448 B1

## Description

L'invention concerne un procédé et un produit de protection contre la corrosion d'un matériau métallique non ferreux, en particulier alliage léger d'aluminium, par exemple alliage aluminium-magnésium (type 5154), alliage aluminium-magnésium-cuivre (type 2024), alliage aluminium-magnésium-zinc (type 7075).

Les alliages métalliques non ferreux, tels qu'alliage léger d'aluminium (notamment alliage contenant du magnésium) sont très utilisés dans l'aéronautique et, de plus en plus, dans d'autres secteurs, en particulier dans la construction automobile. Les inhibiteurs de corrosion actuellement utilisés dans l'aéronautique pour ce type d'alliage sont tous à base de chromate de zinc ou de strontium, car ce sont les seuls à présenter une efficacité de protection suffisante pour satisfaire aux normes aéronautiques (tests à l'eau salée). Toutefois, les composés à base de chromate hexavalents utilisés sont toxiques et cancérigènes et en voie d'interdiction dans la plupart des pays : de ce fait, un problème grave, non résolu, de protection des alliages légers se pose actuellement à l'industrie aéronautique. De plus, on a pu se rendre compte que ces composés à base de chromate sont plus ou moins rapidement détruits en présence de produits oxydables tels que les glycols qui servent de liquides antigel ; ainsi ces composés sont mal adaptés pour protéger des parties internes (impossibles à repeindre) sur lesquelles ces produits oxydables peuvent être amenés à se répandre.

D'autres types d'inhibiteurs de corrosion ont été proposés pour les alliages légers d'aluminium, mais ceux-ci ont une efficacité très médiocre et sont inutilisables dans l'industrie aéronautique compte tenu des normes actuelles imposées. Les meilleurs produits actuels paraissent être les suivants : produit à base de triphosphate d'alumine modifié (marque "K WHITE 84" fabriqué par "TEIKOKU KAKO Co. Ltd"), produits à base de phosphate de zinc (marque "DELAPHOS 2" fabriqué par "CHIMILAB ESSOR" ; marque "HEUCOPHOS ZPO" fabriqué par "HEUBACH" ; marque "SICOR NOP" fabriqué par "BASF"), produits à base de phosphosilicate de calcium et de baryum (marque "HALOX BW 111" fabriqué par "HALOX PIGMENTS") ; des essais effectués en corrosion accélérée en solution saline (méthode décrite par P. MAURET et P. LACAZE, Corrosion Sciences vol. 22, 4, 321, 1982) ont montré que ces produits assurent des durées d'inhibition totale qui sont de l'ordre de 1 % à 10 % par rapport aux durées d'inhibition assurées par les inhibiteurs à base de chromate.

Par ailleurs, il convient de noter la publication suivante : DATABASE WPI, Derwent Publications, London (GB) AN 79-07066B & JP-B-53047980 & JP-A-50076531 (HITACHI MAXELL) qui décrit l'utilisation dans une batterie au zinc d'un inhibiteur de corrosion mélangé à l'électrolyte ; cet inhibiteur est constitué par un azonaphtalène comprenant deux azotes, l'un portant un groupe hydroxyl et/ou un groupe sulphonique, l'autre un noyau benzénique. En outre, la publication suivante : Chemical Abstracts, Vol. 119, N° 10, 06/09/1993, Columbus, Ohio, US, résumé n° 97977k, décrit des complexes de zinc d'un composé dihydroxyazoïque destinés à la fabrication de colorants pour laine, qui contiennent un cation (H, métal alcalin, $NH_4$).

La présente invention se propose de fournir un nouveau procédé de protection contre la corrosion des matériaux métalliques non ferreux, en particulier des alliages légers d'aluminium.

L'objectif de l'invention est d'utiliser un inhibiteur de corrosion totalement exempt de chrome et possédant une efficacité de protection comparable à celle des chromates (à nombre de moles égal).

Un autre objectif est d'assurer une protection efficace vis-à-vis des produits oxydables tels que glycols.

A cet effet, le procédé conforme à l'invention pour protéger contre la corrosion un matériau métallique non ferreux consiste à recouvrir ledit matériau d'une couche contenant au moins un sel dihydroxyazoïque de solubilité dans l'eau comprise entre 0,01 g/l et 3 g/l, possédant le motif structural suivant :

où Y est un anion salifiable et M un métal.

On a pu constater qu'une protection des alliages légers d'aluminium réalisée à partir d'un tel sel dihydroxyazoïque (totalement exempt de chrome) présentait une efficacité comparable à celle des produits à base de chromate, permettant de satisfaire les normes aéronautiques. De préférence, l'on utilise un sel dihydroxyazoïque dont le groupement Y est un sulfonate et le métal M le zinc, l'étain, le strontium ou un métal alcalino-terreux. De tels sulfonates dihydroxyazoïques présentent une solubilité comprise entre environ 0,1 g/l et 1,5 g/l qui paraît optimale.

Selon un mode de mise en oeuvre avantageux, l'on utilise un sel dihydroxyazoïque possédant la formule chimique suivante :

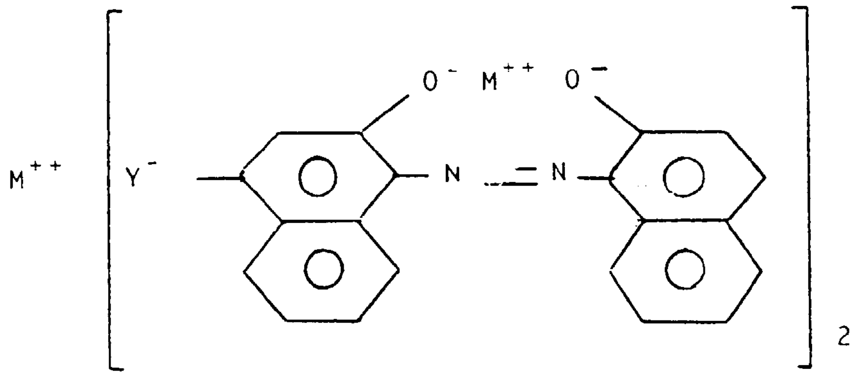

où Y est un anion salifiable, en particulier le sulfonate et M un métal bivalent, en particulier le zinc.

Comme on le verra plus loin, ce produit donne d'excellents résultats et peut être aisément obtenu à partir de produits disponibles sur le marché.

De préférence, le sel utilisé présente une granulométrie moyenne inférieure à 7 microns, en particulier de l'ordre de 2 à 5 microns, et est mélangé à un liant liquide adapté au matériau métallique à protéger, en vue d'être appliqué sur celui-ci sous la forme d'une couche primaire de protection ; le liant connu en lui-même peut en particulier contenir un composé minéral insoluble du groupe suivant : phosphate de zinc, borate de zinc, talc, oxyde de titane. La proportion pondérale de sel dihydroxyazoïque par rapport au liant est avantageusement comprise entre 5 % et 25 %.

L'invention s'étend, en tant que tel, à un nouveau produit de protection contre la corrosion, contenant, mélangé à un liant, un inhibiteur de corrosion constitué par au moins un sel dihydroxyazoïque de solubilité dans l'eau comprise entre 0,01 g/l et 3 g/l, possédant le motif structural suivant :

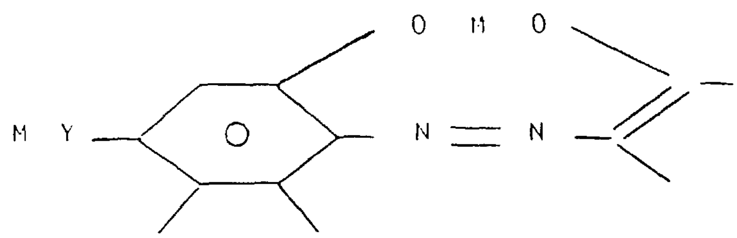

où Y est un anion salifiable, en particulier sulfonate, et M un métal bivalent du groupe : zinc, étain, strontium ou un autre métal alcalino-terreux. Le sel dihydroxyazoïque est en particulier un sel complexe de formule suivante :

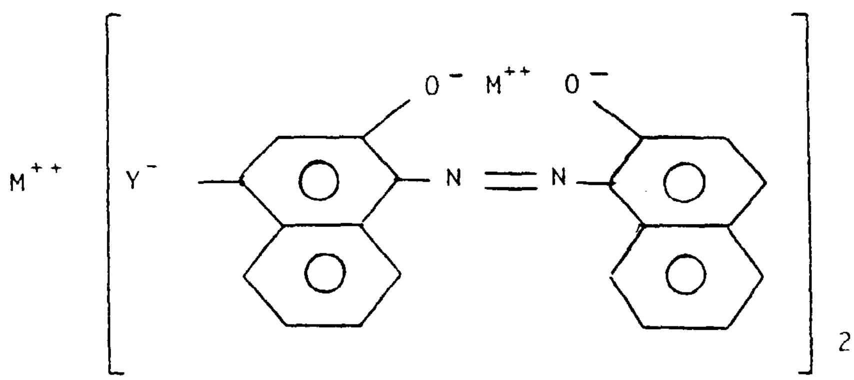

L'inhibiteur de corrosion visé peut être fabriqué à partir d'un sel dihydroxyazoïque soluble disponible sur le marché, en particulier sel de sodium, en réalisant une substitution du métal alcalin et une complexation des deux groupes hydroxyles situés en ortho-ortho' du groupe azoïque.

On a pu constater que le produit de l'invention présente une efficacité accrue lorsque le sel dihydroxyazoïque est associé à un composé minéral insoluble de granulométrie appropriée (préférentiellement entre 2 et 5 microns), en

particulier un phosphate, un silicate (talc) ou un oxyde (oyxde de titane). Il est possible d'obtenir cette association lors de la fabrication du sel dihydroxyazoïque en mélangeant en milieu aqueux (a) un sel dihydroxyazoïque soluble dans l'eau (en particulier sel de sodium), (b) un composé minéral insoluble de granulométrie inférieure à 7 microns, en particulier phosphate ou silicate, et (c) un sel soluble du métal M (chlorure ou autre), en vue de précipiter le sel dihydroxyazoïque du métal M sur les grains du composé minéral, tel que phosphate, silicate ou oxyde. Une filtration (ou centrifugation ou décantation) et des lavages suivis d'un séchage fournissent le produit prêt à être mélangé au liant liquide. Ce produit présente une efficacité de protection accrue par rapport au seul sel dihydroxyazoïque.

L'invention peut tout particulièrement être appliquée pour protéger les alliages du groupe suivant : aluminium-magnésium (type 5154), aluminium-magnésium-cuivre (type 2024), aluminium-magnésium-zinc (type 7075).

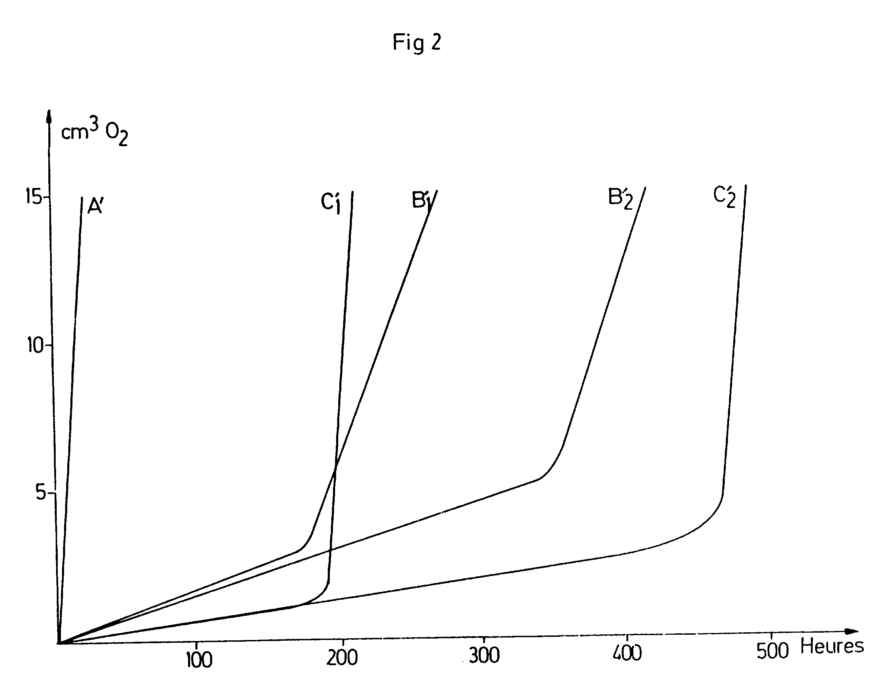

Les exemples qui suivent illustrent la fabrication d'un produit de protection conforme à l'invention, ainsi que les performances obtenues par comparaison avec un inhibiteur de corrosion à base de chromate. Sur les dessins, les figures 1 et 2 sont des diagrammes comparatifs, illustrant les résultats des tests réalisés à l'exemple 2.

EXEMPLE 1 - Exemple de préparation d'un produit de protection à base d'un sel dihydroxyazoïque de zinc

Cette fabrication est réalisée à partir du sulfonate de sodium suivant, disponible sur le marché :

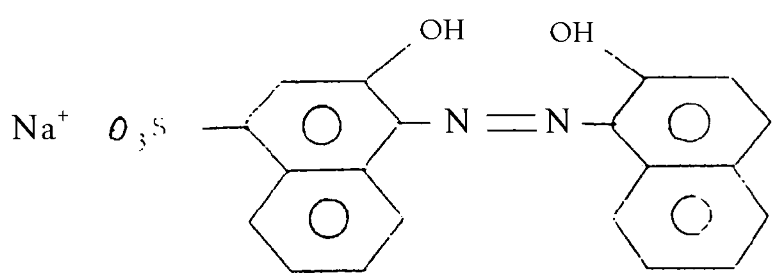

Ce sel soluble est désigné par la suite par sel de départ.

250 g de sel de départ sont dissous dans 2 500 g d'eau à 90° C. La solution est agitée à cette température pendant 1 heure pour obtenir une bonne dissolution. On ajoute alors à chaud (90° C) 450 g de phosphate de zinc sous forme de poudre de granulométrie moyenne égale à 4 microns environ. On agite le mélange pendant 1 heure à la même température de 90° C.

Le mélange est ramené à 40° C environ, puis l'on y ajoute lentement 200 g d'une solution aqueuse de chlorure de zinc à 80 % (pourcentage pondéral).

On chauffe ensuite pendant 3 heures le mélange à 90° C sous agitation, et on laisse décanter pendant 48 heures. On sépare la phase solide en éliminant le liquide surnageant. On soumet cette phase solide à une série de 8 lavages successifs à l'eau ; 2 à 3 litres d'eau sont utilisés à chaque lavage, la phase solide étant séparée par centrifugation entre deux lavages successifs.

On vérifie l'absence de chlorure résiduel par un test au nitrate d'argent et l'absence de sel de départ par une mesure de solubilité.

Le produit est ensuite séché par des méthodes classiques (banc de sable pendant 48 heures entre 60° C et 80° C).

Le produit obtenu analysé par les méthodes classiques est constitué par le sel azoïque suivant :

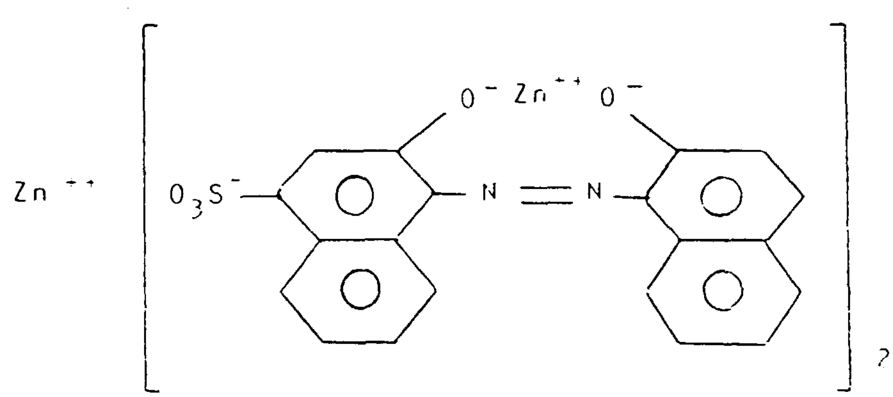

supporté par les grains de phosphate de zinc de granulométrie de l'ordre de 4 microns ; la teneur pondérale en sel azoïque est égale à 25 %. Ce produit constituant l'inhibiteur de corrosion visé par l'invention a fait l'objet de tests comparatifs décrits à l'exemple 2.

Pour obtenir le produit de protection final appelé à revêtir les structures en alliage léger pour former une couche primaire de protection, l'inhibiteur ci-dessus fabriqué est dispersé dans un liant de la même façon qu'un inhibiteur classique au chromate. La proportion pondérale d'inhibiteur est en particulier de l'ordre de 5 % à 30 %. Les liants utilisés peuvent être les mêmes que ceux utilisés pour les inhibiteurs au chromate ; ils sont généralement composés par des solvants organiques, des polymères solubilisés dans ces solvants et des charges minérales insolubles en particulier à base de phosphate de zinc, borate de zinc, talc ou oxyde de titane.

EXEMPLE 2 - Tests comparatifs de corrosion accélérée en milieu salin

L'inhibiteur fabriqué à l'exemple 1 est comparé au chromate de strontium qui est, avec le chromate de zinc, l'inhibiteur de corrosion connu le plus performant utilisé dans l'industrie aéronautique.

Pour permettre de tester l'inhibiteur lui-même (sans interférence avec un liant), les tests ont été conduits en l'absence de liant.

Le protocole de chaque test est le suivant (publication P. MAURET et P. LACAZE déjà citée) :

Dans un flacon d'analyse à fermeture étanche, on introduit soit 0,2 g de limaille d'alliage léger 2024, soit 4 plaquettes du même alliage (dimension : 0,5/8/35 mm), 10 $cm^3$ de solution aqueuse de NaCl à 3 % et le composé inhibiteur. Les courbes des figures 1 et 2 correspondent à des quantités différentes d'inhibiteur :

- courbes A et A' : absence d'inhibiteur,
- courbes $B_1$, $B'_1$ et $B_2$, $B'_2$, respectivement 3,9 millimoles par litre et 7,8 millimoles par litre d'inhibiteur visé par l'invention,
- courbes $C_1$, $C'_1$ et $C_2$, $C'_2$ respectivement 4,9 millimoles par litre et 14,7 millimoles par litre de chromate de strontium.

Les flacons ainsi préparés sont placés dans une étuve oscillante (fréquence d'oscillation : 2 hz) à 60° C pendant des cycles de 18 heures. Avec la limaille, la corrosion est accélérée par l'érosion, avec les plaquettes par l'érosion et l'abrasion. Au terme de chaque cycle, les gaz contenus dans les flacons sont analysés par chromatographie en phase gazeuse. Ensuite les flacons sont ouverts pour régénérer l'atmosphère en vue du cycle suivant. On en déduit le volume d'hydrogène dégagé et le volume d'oxygène absorbé à chaque cycle.

A la figure 1 sont portées les courbes donnant les volumes d'hydrogène dégagés en fonction du temps, et à la figure 2, les courbes donnant les volumes d'oxygène absorbés en fonction du temps. Ces courbes représentent l'évolution de la corrosion qui se déroule selon les réactions cathodiques suivantes :

$$2H_2O + 2e^- \rightarrow 2OH^- + H_2\uparrow$$

$$H_2O + 1/2\ O_2 + 2e^- \rightarrow 2OH^-$$

On constate que les courbes $B_1$ et $C_1$ de même que les courbes $B'_1$ et $C'_1$, qui correspondent à des concentrations molaires d'inhibiteurs voisines (inhibiteur visé par l'invention et inhibiteur au chromate) sont proches : l'efficacité de l'inhibiteur de l'invention est analogue à celle du chromate à concentration molaire égale.

EXEMPLE 3 - Inhibiteur à base d'un sel dihydroxyazoïque de zinc, associé à une teneur de phosphate plus faible

La fabrication de l'inhibiteur est identique à celle de l'exemple 1, mais, dans le mélange, on ajoute seulement 125 g de phosphate de zinc (au lieu de 450 g).

L'inhibiteur obtenu comporte le même sel azoïque, mais avec une teneur pondérale de 50 % par rapport au poids total inhibiteur + phosphate.

Des tests comparatifs analogues à ceux de l'exemple 2 ont donné des résultats comparables. La présence du phosphate est en particulier utile en ce qu'elle permet d'ajuster la granulométrie du produit ; elle paraît également améliorer l'efficacité inhibitrice du produit, mais sa teneur n'est pas critique.

EXEMPLE 4 - Inhibiteur à base d'un sel dihydroxyazoïque de strontium

La fabrication de cet inhibiteur est réalisée à partir du même sel de départ qu'à l'exemple 1 par un protocole identique, le chlorure de zinc étant remplacé par le chlorure de strontium dans les mêmes proportions.

L'inhibiteur obtenu est constitué par le sel suivant :

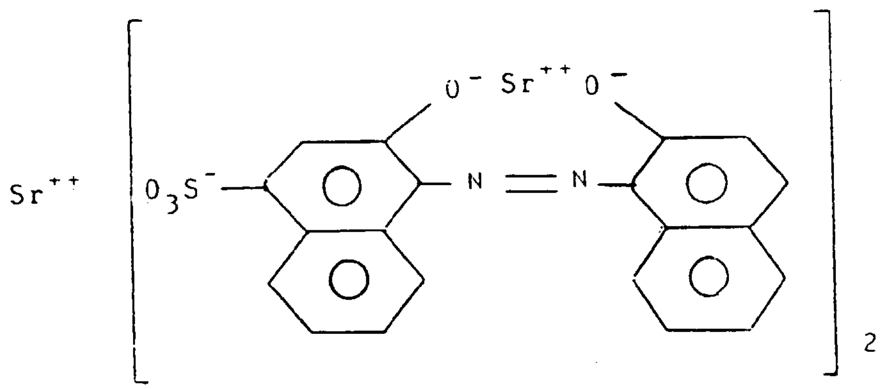

supporté par des grains de phosphate de zinc de granulométrie de l'ordre de 4 microns.

Des tests comparatifs analogues à ceux de l'exemple 2 ont donné des résultats comparables.

## Revendications

1. Procédé de protection contre la corrosion d'un matériau métallique non ferreux, caractérisé en ce qu'il consiste à recouvrir ledit matériau d'une couche totalement exempte de chrome, contenant au moins un sel dihydroxyazoïque de solubilité dans l'eau comprise entre 0,01 g/l et 3 g/l, possédant le motif structural suivant :

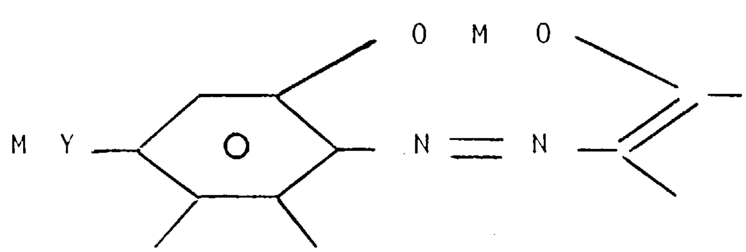

où Y est un anion salifiable et M un métal.

2. Procédé selon la revendication 1, caractérisé en ce que l'on utilise un sel dihydroxyazoïque de solubilité comprise entre 0,1 g/l et 1,5 g/l, le groupement Y étant un sulfonate et le métal M le zinc, l'étain, le strontium ou un autre métal alcalino-terreux.

3. Procédé selon l'une des revendications 1 ou 2, caractérisé en ce que l'on utilise un sel dihydroxyazoïque possédant la formule chimique suivante :

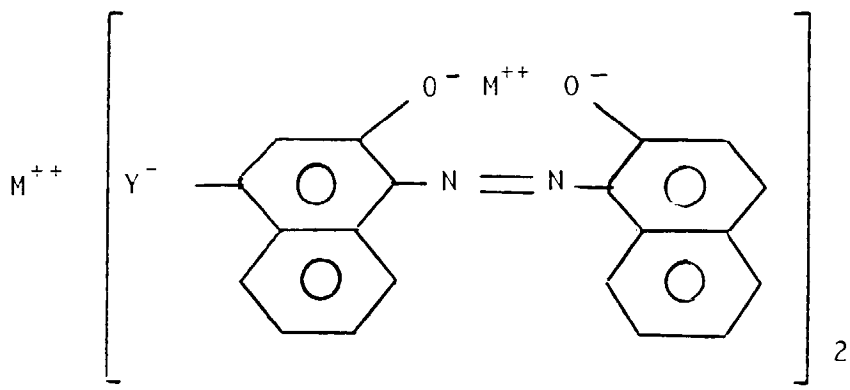

où Y est un anion salifiable et M un métal bivalent.

**4.** Procédé selon l'une des revendications 1, 2 ou 3, caractérisé en ce que l'on utilise un sel dihydroxyazoïque de granulométrie moyenne inférieure à 7 microns.

**5.** Procédé selon l'une des revendications 1, 2, 3 ou 4, dans lequel le sel dihydroxyazoïque est mélangé à un liant liquide adapté au matériau métallique à protéger, le mélange étant appliqué sur la surface dudit matériau pour former une couche primaire de protection.

**6.** Procédé selon la revendication 5, caractérisé en ce que l'on utilise un liant contenant un composé minéral insoluble du groupe suivant : phosphate de zinc, borate de zinc, talc, oxyde de titane.

**7.** Procédé selon l'une des revendications 5 ou 6, dans lequel l'on mélange, en poids, au liant entre 5% et 30 % de sel dihydroxyazoïque.

**8.** Application du procédé conforme à l'une des revendications 1, 2, 3, 4, 5, 6 ou 7 pour protéger un matériau métallique constitué par un alliage du groupe suivant : aluminium-magnésium (type 5154), aluminium-magnésium-cuivre (type 2024), aluminium-magnésium-zinc (type 7075).

**9.** Produit de protection contre la corrosion des matériaux métalliques non ferreux, tel qu'alliages à base d'aluminium, caractérisé en ce qu'il est constitué par un mélange totalement exempt de chrome, comprenant un liant et un inhibiteur de corrosion constitué par au moins un sel dihydroxyazoïque de solubilité dans l'eau comprise entre 0,01 g/l et 3 g/l, possédant le motif structural suivant :

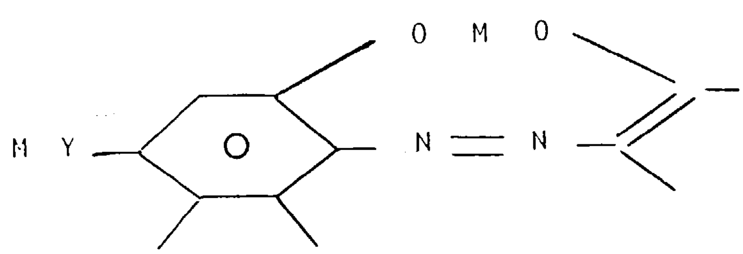

où Y est un anion salifiable et M un métal bivalent du groupe : zinc, étain, strontium ou autre métal alcalino-terreux.

**10.** Produit de protection selon la revendication 9, dans lequel Y est l'anion sulfonate et M le métal zinc.

**11.** Produit de protection selon l'une des revendications 9 ou 10, caractérisé en ce que le sel dihydroxyazoïque est combiné à des grains d'un composé minéral insoluble de granulométrie inférieure à 7 microns.

**12.** Produit de protection selon l'une des revendications 9, 10 ou 11, caractérisé en ce qu'il contient un sel dihydroxyazoïque de formule suivante :

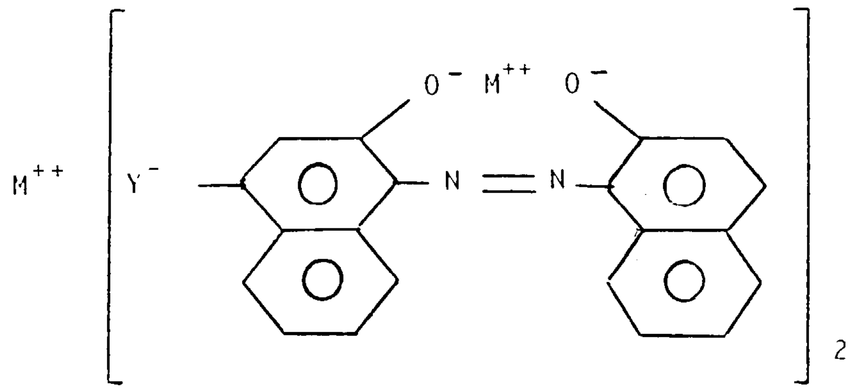

13. Procédé de fabrication d'un inhibiteur de corrosion tel que visé à la revendication 11, caractérisé en ce qu'on mélange en milieu aqueux (a) un sel dihydroxyazoïque soluble dans l'eau, en particulier sel dihydroxyazoïque de sodium, (b) un composé minéral insoluble de granulométrie inférieure à 7 microns, en particulier un phosphate, un silicate ou un oxyde, et (c) un sel soluble du métal M, en vue de précipiter le sel dihydroxyazoïque du métal M sur les grains du composé minéral.

## Patentansprüche

1. Verfahren zum Schutz gegen Korrosion eines metallischen Nichteisen-Werkstoffs, dadurch gekennzeichnet, daß es darin besteht, daß man den besagten Werkstoff mit einer vollkommen chromfreien Schicht überzieht, die mindestens ein Azodihydroxidsalz mit einer Wasserlöslichkeit zwischen 0,01 g/l und 3 g/l umfaßt, und zwar hat das besagte Azodihydroxidsalz die folgende Allgemeinstruktur

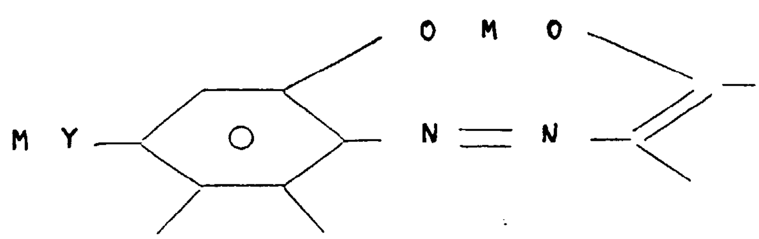

wobei Y ein salzbildendes Anion und M ein Metall ist.

2. Verfahren nach Anspruch 1, dadurch gekennzeichnet, daß von einem Azodihydroxidsalz mit einer Löslichkeit zwischen 0,1 g/l und 1,5 g/l Gebrauch gemacht wird, wobei die Gruppe Y ein Sulfonat und das Metall M Zink, Zinn, Strontium oder ein anderes Erdalkalimetall ist.

3. Verfahren nach einem der Ansprüche 1 oder 2, dadurch gekennzeichnet, daß von einem Azodihydroxidsalz Gebrauch gemacht wird, dessen chemische Formel wie folgt ist

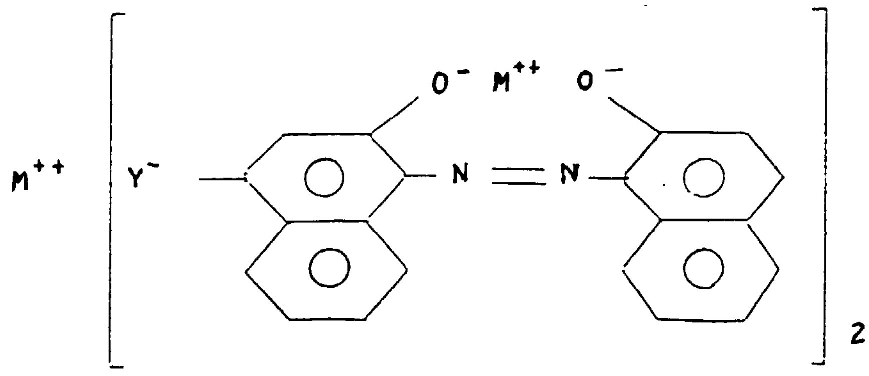

wobei Y ein salzbildendes Anion und M ein zweiwertiges Metall ist.

**4.** Verfahren nach einem der Ansprüche 1, 2 oder 3, dadurch gekennzeichnet, daß von einem Azodihydroxidsalz Gebrauch gemacht wird, dessen mittlere Korngröße geringer ist als 7 Mikron.

**5.** Verfahren nach einem der Ansprüche 1, 2, 3 oder 4, bei dem das Azohydroxidsalz einem dem zu schützenden metallischen Werkstoff entsprechenden flüssigen Bindemittel zugemischt wird, wobei das Gemisch auf die Oberfläche des besagten Werkstoffs aufgetragen wird, um eine primäre Schutzschicht zu bilden.

**6.** Verfahren nach Anspruch 5, dadurch gekennzeichnet, daß von einem Bindemittel Gebrauch gemacht wird, das eine unlösliche mineralische Verbindung der folgenden Gruppe enthält: Zinkphosphat, Zinkborat, Talk, Titanoxid.

**7.** Verfahren nach einem der Ansprüche 5 oder 6, bei dem dem Bindemittel zwischen 5 und 30 % nach Gewicht Azodihydroxidsalz zugemischt wird.

**8.** Anwendung des Verfahrens nach einem der Ansprüche 1, 2, 3, 4, 5, 6 oder 7 zum Schutz eines metallischen Werkstoffs, der aus einer Legierung der Gruppe Aluminium-Magnesium (Typ 5154), Aluminium-Magnesium-Kupfer (Typ 2024) bzw. Aluminium-Magnesium-Zink (Typ 7075) besteht.

**9.** Produkt zum Schutz gegen Korrosion von metallischen Nichteisen-Werkstoffen wie auf Aluminium basierenden Legierungen, dadurch gekennzeichnet, daß des aus einem vollkommen chromfreien Gemisch besteht, das ein Bindemittel und einen Korrosionshemmstoff umfaßt, der mindestens aus einem Azodihydroxidsalz besteht, dessen Wasserlöslichkeit zwischen 0,01 g/l und 3 g/l beträgt und dessen Allgemeinstruktur wie folgt ist:

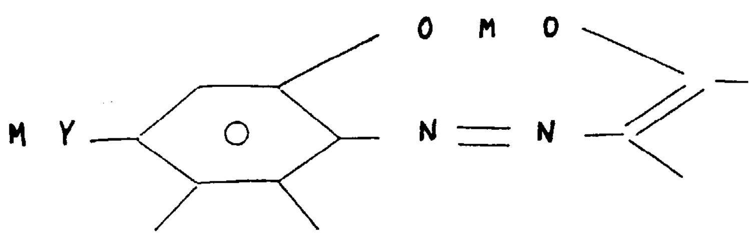

wobei Y ein salzbildendes Anion und M ein zweiwertiges Metall der Gruppe Zink, Zinn, Strontium oder ein anderes erdalkalisches Metall ist.

**10.** Schutzprodukt nach Anspruch 9, bei dem Y das Sulfonatanion und M das Metall Zink ist.

**11.** Schutzprodukt nach einem der Ansprüche 9 oder 10, dadurch gekennzeichnet, daß das Azodihydroxidsalz mit Körnern einer unlöslichen mineralischen Verbindung verbunden ist, deren Korngröße geringer ist als 7 Mikron.

**12.** Schutzprodukt nach einem der Ansprüche 9, 10 oder 11, dadurch gekennzeichnet, daß es ein Azodihydroxidsalz

der folgenden Formel enthält:

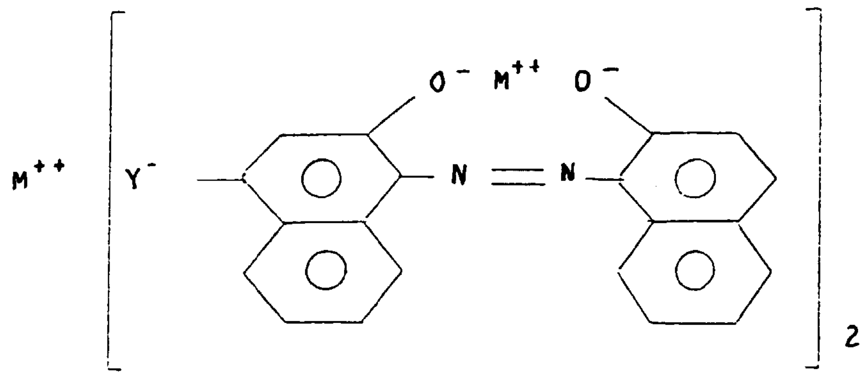

**13.** Verfahren zur Herstellung eines Hemmstoffs nach Anspruch 11, dadurch gekennzeichnet, daß in wässerigem Medium (a) ein wasserlösliches Azodihydroxidsalz, insbesondere ein Natrium-Azodihydroxidsalz, (b) eine unlösliche mineralische Verbindung mit einer Körngröße von weniger als 7 Mikron, insbesondere ein Phosphat, ein Silicat oder ein Oxid, und (c) ein lösliches Salz des Metalls M gemischt werden, so daß sich das Azodihydroxidsalz des Metalls M an den Körnern der mineralischen Verbindung absetzt.

## Claims

**1.** Method for protecting a metallic non-ferrous material against corrosion, characterised in that it consists in coating said material with a layer entirely free from chromium and containing at least one azodihydroxide salt with a solubility in water between 0.01 g/l and 3 g/l, whereby the general structure of said salt is as follows:

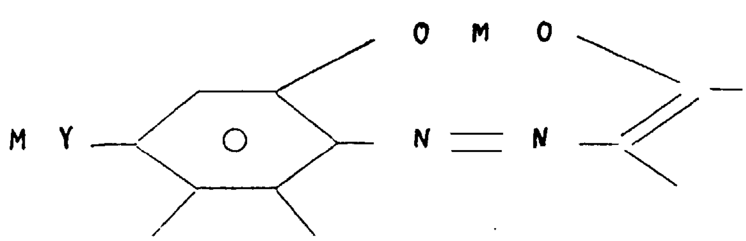

Y being a salt-forming anion and M a metal.

**2.** Method according to Claim 1, characterised in that use is made of an azodihydroxide salt with a solubility between 0.1 g/l and 1.5 g/l, the group Y being a sulfonate and the metal M zinc, tin, strontium or another alkaline-earth metal.

**3.** Process according to one of Claims 1 or 2, characterised in that use is made of an azodihydroxide salt with the following chemical formula

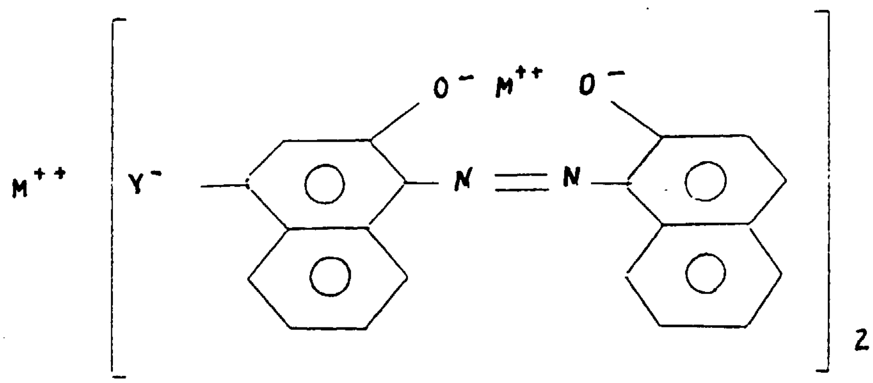

where Y is a salt-forming anion and M is a bivalent metal.

**4.** Method according to one of Claims 1, 2 or 3, characterised in that use is made of an azodihydroxide salt with a mean granulometric size of less than 7 microns.

**5.** Method according to one of Claims 1, 2, 3 or 4, in which the azodihydroxide salt is admixed to a liquid binder appropriate for the metallic material which is to be protected, the mixture being applied to the surface of said material so as to form a primary protecting layer.

**6.** Process according to Claim 5, characterised in that use is made of a binder containing an insoluble mineral compound pertaining to the following group: zinc phosphate, zinc borate, talcum, titanium oxide.

**7.** Method according to one of Claims 5 or 6, in which between 5% and 30% by weight of azodihydroxide salt is admixed to the binder.

**8.** Application of the method according to one of Claims 1, 2, 3, 4, 5, 6 or 7 for protecting a metallic material constituted by an alloy pertaining to the following group: aluminium-magnesium (type 5154), aluminium-magnesium-copper (type 2024), aluminium-magnesium-zinc (type 7075).

**9.** Product for protecting non-ferrous metallic materials such as aluminium-based alloys against corrosion, characterised in that it is constituted by a mixture entirely free from chromium and comprising a binder and a corrosion inhibitor constituted by at least one azodihydroxide salt with a solubility in water between 0.01 g/l and 3 g/l, the general structure of said salt being as follows:

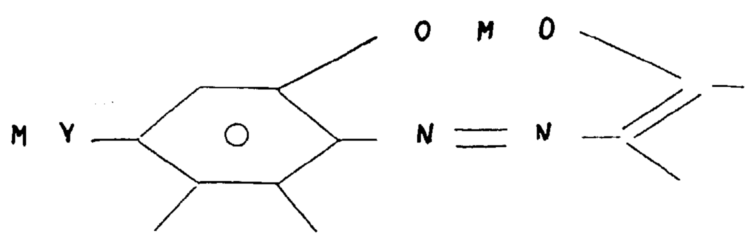

where Y is a salt-forming anion and M a bivalent metal pertaining to the group: zinc, tin, strontium or another alkaline-earth metal.

**10.** Protective product according to Claim 9, in which Y is the sulfonate anion and M the metal zinc.

**11.** Protective product according to one of Claims 9 or 10, characterised in that the azodihydroxide salt is combined with grains of an insoluble mineral compound with a granulometric size of less than 7 microns.

**12.** Protective product according to one of Claims 9, 10 or 11, characterised in that it contains an azodihydroxide salt

with the following formula:

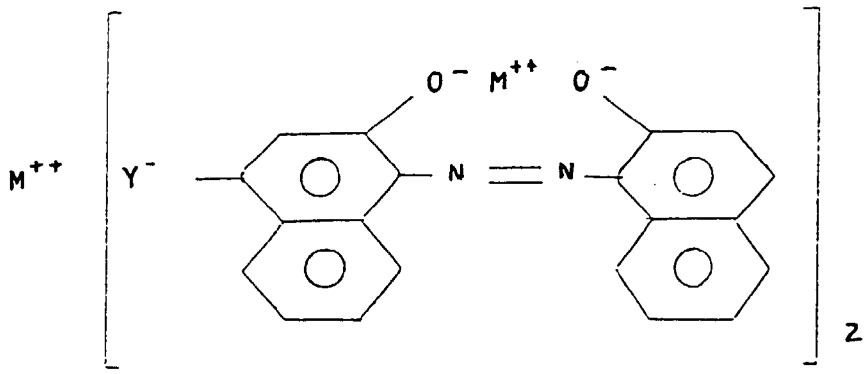

**13.** Method for manufacturing a corrosion inhibitor according to Claim 11, characterised in that (a) a watersoluble azodihydroxide salt, in particular an azodihydroxide salt of sodium, (b) an insoluble mineral compound with a granulometric size of less than 7 microns, in particular a phosphate, a silicate or an oxide, and (c) a soluble metal salt M are mixed in aqueous medium so as to precipitate the azodihydroxide salt of the metal M onto the grains of the mineral compound.

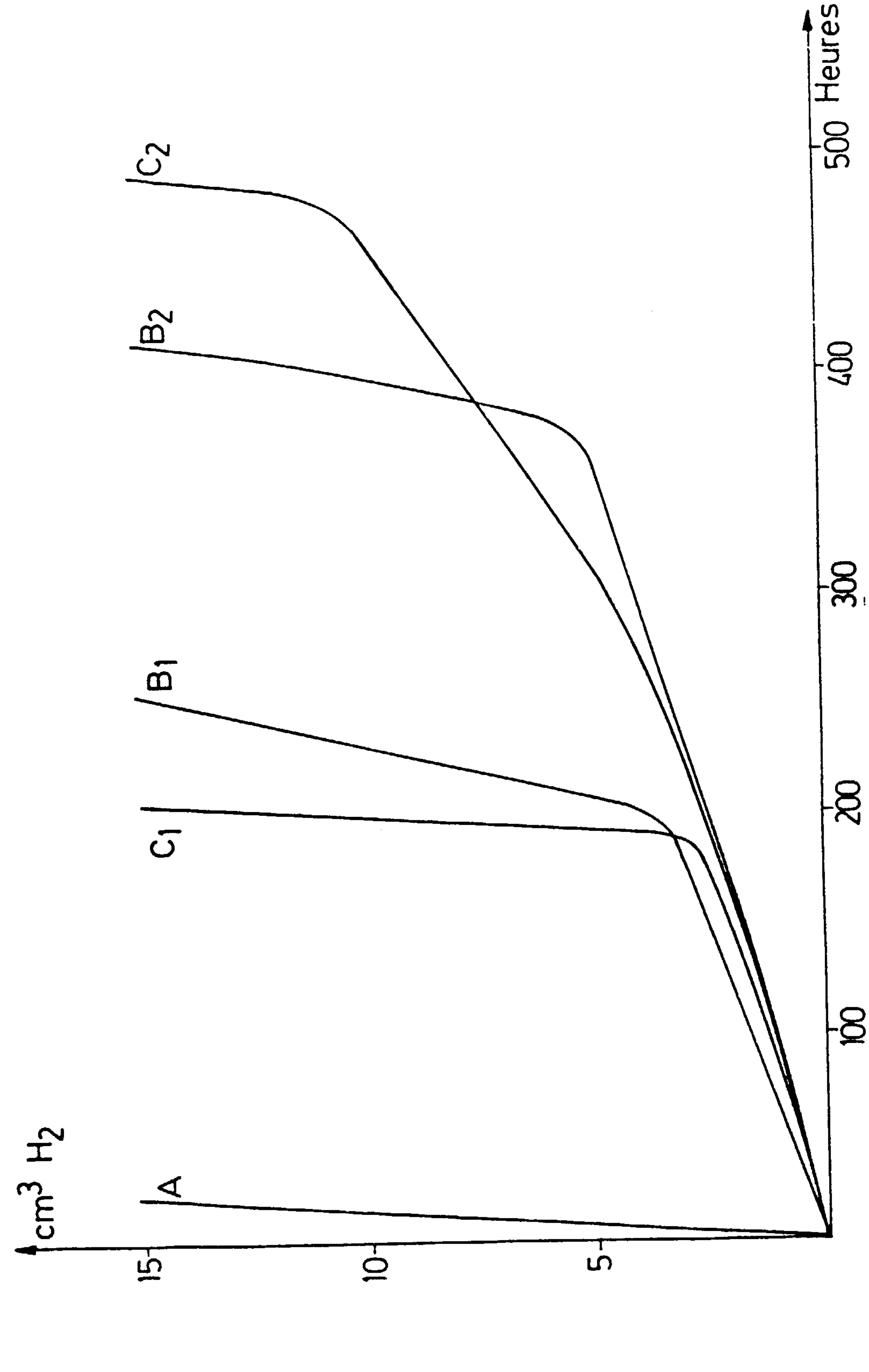


Fig 1

Fig 2